# EUROPÄISCHE PATENTSCHRIFT

(11) **EP 1 035 139 B1**
(45) Veröffentlichungstag und Bekanntmachung des Hinweises auf die Patenterteilung: **17.11.2004**
(21) Anmeldenummer: 00103130.1
(22) Anmeldetag: 16.02.2000
(51) Int. Cl.: C08F 6/00

(54) **Verfahren zur Herstellung von W/O-Emulsionen mit reduziertem Restmonomergehalt**
Process for preparing w/o emulsions having reduced content of residual monomers
Procédé pour la préparation d'émulsions eau dans l'huile à teneur réduite en monomère résiduel

(30) Priorität: 12.03.1999 DE 19911170
(43) Veröffentlichungstag der Anmeldung: 13.09.2000
(73) Patentinhaber: BASF AKTIENGESELLSCHAFT, 67056 Ludwigshafen (DE)
(72) Erfinder: Gotsche, Michael, Dr., 52066 Aachen (DE); Wood, Claudia, Dr., 69469 Weinheim (DE); Tiefensee, Kristin, Dr., 67368 Westheim (DE)

(56) Entgegenhaltungen:
- EP-A- 0 363 795
- EP-A- 0 547 492
- DE-A- 19 741 187

## Beschreibung

Die Erfindung betrifft ein Verfahren zur Herstellung von W/O-Emulsionen, in denen vernetzte, wasserquellbare Polymerisate dispergiert sind, durch Nachbehandlung mit einem speziellen Redoxinitiatorsystem zur Verminderung der Restmonomerenmenge.

Vernetzte Acrylsäurepolymerisate werden als Verdicker im Textildruck sowie in kosmetischen und pharmazeutischen Zubereitungen eingesetzt. Diese Polymerisate können durch radikalische Polymerisation oder Copolymerisation in W/O-Emulsionen hergestellt werden. Beim Einarbeiten in wäßrige Formulierungen invertieren solche Emulsionen und führen zum Verdicken der Formulierungen.

In der EP 383 057 wird ein vernetztes Copolymerisat aus Acrylsäure und nitrilgruppenhaltigen Comonomeren beschrieben, die in einer Wasser/Paraffin-Emulsion hergestellt werden. Die beschriebenen Emulsionen werden im Textildruck eingesetzt.

In der DE 35 22 419 wird die umgekehrte Emulsionspolymerisation von Acrylamid mit Acrylsäure in einem Verfahrensschritt beschrieben.

Ein Verfahren zur Herstellung wasserlöslicher oder wasserquellbarer Polymerer in einer W/O-Emulsion beansprucht die EP 126 528, das dadurch gekennzeichnet ist, daß die wasserlöslichen Monomere in Anwesenheit von Emulgatoren unter Zusatz eines speziellen Dispergiersystems bestehend aus Alkanole polymerisiert werden.

Vernetzte Acrylsäurepolymerisate in einer W/O-Emulsion sind außerdem in der EP 297 184 als Wasserabsorbens beschrieben.

W/O-Emulsionspolymerisate enthalten nach ihrer Herstellung durch radikalische Polymerisation oder Copolymerisation neben einem Polymer-Feststoffanteil von 15 bis 50 Gew.-% aufgrund der unvollständigen Polymerisation der eingesetzten Monomeren in der radikalischen Hauptpolymerisation, die meist bis zu einem Monomerenumsatz von 95 und bevorzugt von 98 bis 99,8 Gew.-% geführt wird, noch einen unerwünschten Anteil an nichtpolymerisierten freien Monomeren ("Restmonomere"). Aus meist toxikologischen Gründen fordert der Markt Polymerisate mit einem niedrigen Gehalt an Restmonomeren bei gleichbleibenden Verarbeitungsund Anwendungseigenschaften.

Methoden zur Absenkung von Restmonomeren in wäßrigen Polymerdispersionen sind hinreichend bekannt. Neben nichtchemischen Methoden, wie Inertgas- oder Dampfstrippung, stehen unterschiedlichste chemische Methoden, wie beispielsweise in EP-B 028 348, EP-B 563 726, EP-A 764 699, US-A 4 529 753 beschrieben, zur Absenkung von Restmonomerengehalten wäßriger Polymerdispersionen zur Verfügung.

Gemäß WO 95/33775 können zur Nachbehandlung von wäßrigen Polymerdispersionen Redoxsysteme eingesetzt werden, deren Reduktionsmittel ein Addukt aus Hydrogensulfitanion und einem Keton mit 3 bis 8 C-Atomen und/oder die konjugierte Säure dieses Addukts umfaßt. Die Nachbehandlung wird in Anwesenheit von im wäßrigen Medium löslichen Metallverbindungen vorgenommen.

Die EP-A 767 180 empfiehlt für die Reduktion von Restmonomerengehalten ein Redox-Initiatorsystem aus organischen Hydroperoxiden, die nicht oder nur sehr schlecht in Wasser löslich sind und u.a. Addukten aus Aldeyhyden mit einer C-Kette mit 4 bis 6 C-Atomen und Bisulfiten.

In der Patentanmeldung DE 19840586 wird der Einsatz von Oxidationsmitteln in Kombination mit einem Redoxsystem, enthaltend ein Aldehyd, zur Abreicherung von Restmonomeren von wäßrigen Polymerdispersionen beschrieben.

Gemäß DE 19741187 wird zur chemischen Restmonomerenentfernung ein System aus einem Oxidationsmittel und einer organischen α-Hydroxycarbonsäure eingesetzt.

Die EP 547 492 offenbart ein Verfahren zur Herstellung von polymerhaltigen W/O-Emulsionen, bei dem eine Nachreaktion mit tert.-Butylhydroperoxid, Na-hydroxymethylsulfinat und Fe-II-sulfat stattfindet.

Alle Verfahren beziehen sich auf die Behandlung von wäßrigen Polymerdispersionen. Für die Restmonomerenabsenkung von acrylsäurehaltigen W/O-Emulsionspolymerisaten in W/O-Emulsion sind bisher keine Verfahren beschrieben. In diesen W/O-Emulsionen befinden sich die Polymerisate in isolierten, in der Ölphase emulgierten Wassertröpfchen. Damit wird verhindert, daß sich, wie in einem System mit kontinuierlicher wäßriger Phase zu beobachten, eine schwer zu verarbeitende Gelphase ausbildet.

Der vorliegenden Erfindung lag deshalb die Aufgabe zugrunde, ein neues wirksames Verfahren zur Verminderung der Restmonomerenmenge von vernetzte, wasserquellbare Polymerisate enthaltenden W/O-Emulsionen bereitzustellen. Dabei sollen die anwendungstechnischen Eigenschaften der W/O-Emulsion, speziell die Verdickerwirkung, nicht beeinflußt werden. Außerdem soll die Verminderung der Restmonomerenmenge sich leicht technisch nutzen lassen.

Es wurde nun gefunden, daß sich die Menge an Restmonomeren in W/O-Emulsionen, die vernetzte, in Wasser gequollene Polymerisate enthalten, wirksam vermindern läßt, wenn man die Nachbehandlung der Restmonomere enthaltenden W/O-Emulsion unter Zugabe eines Redox-Initiatorsystems durchführt

Das beanspruchte Verfahren besteht darin, daß die Nachbehandlung mit einem Redox-Initiatorsystem ausgeführt wird, das im wesentlichen
a) 0,001 bis 5 Gew.-%, bezogen auf die zur Herstellung des Polymerisats verwendete Gesamtmonomerenmenge
   a1) eines Oxidationsmittels

      R¹OOH,

      worin R¹ Wasserstoff, eine C₁- bis C₈-Alkyl- oder eine C₆- bis C₁₂-Arylgruppe bedeutet, und/oder
   a2) einer in wäßrigem Medium Wasserstoffperoxid freisetzende Verbindung, und
b) 0,005 bis 5 Gew.-%, bezogen auf die zur Herstellung des Polymerisats verwendete Gesamtmonomerenmenge
   b1) einer α-Hydroxycarbonylverbindung 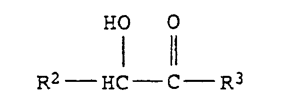 in der die Variablen unabhängig voneinander folgende Bedeutung haben:
      - R²: Wasserstoff, eine C₁-C₁₂-Alkylgruppe, die gegebenenfalls funktionelle Gruppen enthält und/oder olefinisch ungesättigt sein kann,
      - R³: Wasserstoff, OH, eine C₁-C₁₂-Alkylgruppe, die gegebenenfalls funktionelle Gruppen enthält und/oder olefinisch ungesättigt sein kann,
      und wobei R² und R³ eine Ringstruktur ausbilden können, die ein Heteroatom und/oder funktionelle Gruppen enthalten und/oder olefinisch ungesättigt sein kann,
      und/oder
   b2) einer in wäßrigem Medium solche α-Hydroxycarbonylverbindung freisetzende Verbindung, und
c) katalytische Mengen eines mehrwertigen Metallions, das in mehreren Wertigkeitsstufen auftreten kann,
umfaßt.

Das Oxidationsmittel des Redox-Initiatorsystems soll in der Lage sein, Radikale zu bilden. Im Redoxsystem wird bevorzugt Wasserstoffperoxid als Oxidationsmittel eingesetzt, aber auch anorganische Verbindungen wie Kaliumperoxid, Natriumperoxid, Natriumperborat, sowie weitere in wäßrigem Medium Wasserstoffperoxid bildende Vorstufen. Ferner können beispielsweise auch Ammonium-, Kalium- oder Natriumpersulfat, Peroxydischwefelsäure und deren Salze, Ammonium-, Kalium- oder Natriumperphosphat oder -diperphosphat, Kaliumpermanganat und andere Salze von Persäuren eingesetzt werden. Prinzipiell ebenfalls geeignet sind organische Hydroperoxide, wie beispielsweise tert.-Butylhydroperoxid und Cumolhydroperoxid. Es ist jedoch auch möglich, Gemische verschiedener Oxidationsmittel einzusetzen.

Die Menge an zugesetztem Oxidationsmittel liegt üblicherweise im Bereich von 0,001 bis 5, bevorzugt bei 0,002 bis 3, besonders bevorzugt bei 0,003 bis 2, ganz besonders bevorzugt bei 0,01 bis 1 und vorzugsweise bei 0,02 bis 0,8 Gew.-%, bezogen auf die Gesamtmonomerenmenge.

Als Reduktionsmittel des Redox-Initiatorsystems können die üblichen verwendbaren Mittel eingesetzt werden.

Als Reduktionsmittel sind insbesondere aliphatische α-Hydroxycarbonsäuren sowie Vorstufen, die in wäßriger Lösung diese α-Hydroxycarbonsäuren freisetzen, geeignet. Für α-Hydroxycarbonsäuren beispielhaft genannt seien aliphatische Hydroxycarbonsäuren mit bevorzugt 2 bis 8 C-Atomen geeignet, wie Glykolsäure (Hydroxyessigsäure), Glyoxylsäurehydrat (Dihydroxyessigsäure), Milchsäure (2-Hydroxypropionsäure), Glycerinsäure (2,3-Dihydroxypropionsäure), Äpfelsäure (2-Hydroxybernsteinsäure) oder Tartronsäure (2-Hydroxymalonsäure). Bevorzugt ist die Verwendung von Weinsäure.

Als Reduktionsmittel geeignet sind aber auch aliphatische α-Hydroxycarbonylverbindungen, wie aliphatische α-Hydroxyaldehyde und/oder aliphatische α-Hydroxyketone, deren Isomeren und/oder mit funktionellen Gruppen substituierten und/oder olefinisch ungesättigte Verbindungen und Gemische davon, sowie Vorstufen, die in wäßriger Lösung diese α-Hydroxycarbonylverbindungen freisetzen, geeignet. Für α-Hydroxycarbonylverbindungen beispielhaft genannt seien Glykolaldehyd und/oder dessen Dimeres 2,5-Dihydroxy-1,4-dioxan, Phenylglykolaldehyd, 2-Hydroxy-3-phenylpropionaldehyd, Glycerinaldehyd und dessen höheren homologen Verbindungen, wie Aldotetrosen, Aldopentosen und Aldohexosen, sowie α-Hydroxyaceton, α,α'-Dihydroxyaceton, 1-Hydroxybutanon-2, 1-Hydroxypentanon-2, 1-Hydroxyhexanon-2, 2-Hydroxy-2-methylbutanon-3 (Acetoin), 4-Hydroxyhept-2-enon-5, 2-Hydroxypentanon-3, 3-Hydroxypentanon-2, 3-Hydroxyheptanon-4, 4-Hydroxyheptanon-3, 4-Hydroxy-2,2-dimethylpentanon-3, 3-Hydroxy-2,2-dimethylpentanon-4, 2-Hydroxy-1-phenylpropanon-1, 1-Hydroxy-1-phenylpropanon-2, 1-Hydroxy-1-phenylbutanon-2, 2-Hydroxy-1-phenylbutanon-1, 2-Hydroxy-1,2-diphenylethanon (Benzoin), 2-Hydroxy-1-phenylpentandion-1,4, 1-Hydroxy-1-phenylpentandion-2,4, aber auch cyclische α-Hydroxyketone, wie 2-Hydroxycyclohexanon und 2-Hydroxycyclopentanon. Bevorzugt werden α-Hydroxyaceton, α,α'-Dihydroxyaceton, 1-Hydroxybutanon-2, 1-Hydroxypentanon-2, Glutaroin, Adipoin und/oder 2-Hydroxy-2-methylbutanon-3 (Acetoin), besonders bevorzugt jedoch α-Hydroxyaceton und/oder α,α'-Dihydroxyaceton eingesetzt.

Die Menge an zugesetztem Reduktionsmittel liegt üblicherweise im Bereich von 0,005 bis 5, bevorzugt bei 0,01 bis 3, besonders bevorzugt bei 0,03 bis 2 und ganz besonders bevorzugt bei 0,05 bis 1 und vorzugsweise bei 0,02 bis 0,8 Gew.-%, bezogen auf die Gesamtmonomerenmenge. Auch höhere Mengen an Reduktionsmittel sind möglich, in der Regel aber wirtschaftlich nicht sinnvoll.

Die für die Nachbehandlung vorteilhaften Metallverbindungen sind üblicherweise vollständig im wäßrigen Medium der W/O-Emulsion löslich und deren metallische Komponente darüber hinaus in der Lage, in mehreren Wertigkeitsstufen vorliegen zu können. Die gelösten Metallionen wirken katalytisch und unterstützen die Elektronenübertragungsreaktionen zwischen den eigentlich wirksamen Oxidations- und Reduktionsmitteln. Als gelöste Metallionen kommen prinzipiell Eisen-, Kupfer-, Mangan-, Vanadin-, Nickel-, Cobalt-, Titan-, Cer- oder Chromionen in Betracht. Selbstverständlich ist es auch möglich, Gemische verschiedener, sich nicht störender Metallionen, wie beispielsweise das System Fe₂/₃+/VSO₄-, zu verwenden. Bevorzugt werden Eisenionen eingesetzt.

Die gelösten Metallionen werden in katalytischen Mengen, üblicherweise im Bereich 1 bis 1000, bevorzugt 5 bis 500 und besonders bevorzugt 10 bis 100 ppm, bezogen auf die Gesamtmonomerenmasse verwendet.

Die Komponenten des erfindungsgemäß verwendeten Initiatorsystems werden zweckmäßigerweise zur Nachbehandlung auf ca. 30 bis 130, bevorzugt 40 bis 90 und besonders bevorzugt auf 40 bis 80°C erhitzten W/O-Emulsionspolymerisats bevorzugt bei Normaldruck, gegebenenfalls aber auch bei einem Druck von größer oder kleiner 1 bar (absolut), unter Rühren allmählich gleichzeitig oder nacheinander zudosiert, wobei im letzten Fall bevorzugt zuerst das Oxidationsmittel zugesetzt wird. Besonders günstig ist das gleichzeitige Zudosieren von Oxidations- und Reduktionsmittel über zwei separate Zuläufe. Dabei kann die Zugabe der Initiatorkomponenten beispielsweise von oben, unten oder durch die Seite des Reaktors erfolgen. Bevorzugt wird das Initiatorsystem jedoch von unten dosiert. Da die optimale Dauer der Initiatorzudosierung von der Monomerenzusammensetzung, der Größe des Reaktionsansatzes und der Reaktorgeometrie abhängig ist, ist es zweckmäßig, diese in Vorversuchen zu ermitteln. Abhängig von der gestellten Aufgabe kann die Dauer der Initiatorzugabe wenige Sekunden oder mehrere Stunden betragen. Besonders günstig ist es, wenn die in katalytischen Mengen eingesetzte Metallverbindung dem W/O-Emulsionspolymerisat vor der Zugabe des Oxidations- und Reduktionsmittels zugesetzt wird. Zur Sicherstellung ausreichender Metallionen-Konzentrationen während der Nachbehandlung ist daher der Zusatz von Komplexiermitteln, wie beispielsweise Ethylendiamintetraessigsäure, Nitrilotriessigsäure und Diethylentriaminpentaessigsäure und/oder deren jeweiliger Natriumsalze und/oder die Verwendung von stabilen Metallionenkomplexen, wie beispielsweise Eisen-(III)/Natrium-Ethylendiamintetraacetat von besonderem Vorteil.

Der pH-Wert der Emulsion ist während der Nachbehandlung bevorzugt ≤ 9.

Die Erfindung betrifft auch die mit dem vorliegenden Verfahren hergestellten W/O-Emulsionen, insbesondere solche W/O-Emulsionen, die einen Restmonomerengehalt von weniger als 300 ppm, bevorzugt weniger als 200 ppm, bezogen auf die gesamte W/O-Emulsion,aufweisen.

Die in der vorliegenden Erfindung bevorzugt eingesetzten W/O-Emulsionspolymerisate bestehen aus
a) 35 bis 100 Gew.-% ionischen Monomeren,
b) 0 bis 65 Gew.-% nicht-ionischen Monomeren
c) 0,3 bis 1 mol-%, bezogen auf a) und b) mindestens eines mindestens bifunktionellen Monomeren.

Das erfindungsgemäße Verfahren zur Reduzierung eignet sich besonders zur Verminderung der Restmonomerenmenge in acrylsäurehaltigen Polymerisaten, die durch radikalische Polymerisation in W/O-Emulsion hergestellt sind.

Der bevorzugte Einsatzzweck für die W/O-Emulsionen ist in hautoder haarkosmetischen Zubereitungen.

Die in der vorliegenden Erfindung beschriebene W/O-Polymeremulsion wird durch umgekehrte Emulsionspolymerisation hergestellt. Im ersten Schritt wird eine wäßrige Monomerlösung mit für diese Systeme typischen W/O-Emulgatoren in einer Ölphase emulgiert. Die Polymerisation wird durch radikalbildende Initiatoren gestartet. Da die Polymerisate als Verdicker fungieren sollen, müssen sie chemisch vernetzt sein. Der Vernetzer wird vorzugsweise der Monomerlösung zugesetzt.

Als Monomere werden bevorzugt ungesättigte C₃-C₅-Carbonsäuren eingesetzt, wie z.B. Acrylsäure, Methacrylsäure, Maleinsäure-(anhydrid), Fumarsäure(anhydrid), Itaconsäure oder deren Mischungen. Sie können homopolymerisiert werden oder mit nicht-ionischen Monomeren copolymerisiert werden. Als solche können ungesättigte Verbindungen Verwendung finden, die sich neben den ionischen Monomeren in Wasser lösen lassen; diese sind z.B. Acrylamid, Methacrylamid, Vinylpyrrolidon, Vinylimidazol, Vinylcaprolactam, Hydroxyalkylester von Carbonsäuren wie z.B. Hydroxyethylacrylsäure. Der Anteil an ionischen Monomeren in der Gesamt-Monomermischung beträgt 35 bis 100 %, vorzugsweise 50 bis 100 %. Besonders bevorzugt ist ein Acrylsäureanteil von > 90 %.

Die ionischen Monomere sind zu 5 bis 80 %, vorzugsweise zu 10 bis 50 %, neutralisiert. Zur Neutralisation können prinzipiell alle Basen verwendet werden, die mit kosmetischen Belangen in Einklang zu bringen sind. Vorzugsweise werden z.B. Triethanolamin, NaOH, Tetrahydroxypropylethylendiamin verwendet. Auch Basengemische sind denkbar.

Die Konzentration der Monomeren in der wäßrigen Lösung vor der Polymerisation beträgt 10 bis 60 %.

Die Vernetzung des Polymerisates erfolgt durch Copolymerisation der Monomeren mit mindestens zweifach ungesättigten wasser- oder öllöslichen Verbindungen. Als solche können fungieren: Methylenbisacrylamid, Divinylpyrrolidon, Allyl(meth)arylat, Triallylamin, Ethylenglykol-Diarylate (bis 50 EO), (Meth)acrylsäureester von zwei bzw. mehrwertigen Alkoholen wie Trimethylolpropantriacrylat oder Pentaerythrittetraacrylat; die Alkoholfunktionen können hierbei bis zu 50 EO-Gruppen tragen und jeweils unterschiedliche Ethoxylierungsgrade aufweisen. Diese Vernetzer sind zu 0,3 bis 1 mol-% einzeln oder als Gemisch enthalten. Wasserlösliche Vernetzer werden bevorzugt.

Als Ölkomponenten können alle bei Raumtemperatur flüssigen Öle verwendet werden, wie z.B. Fettalkohole wie Oleylalkohol, Fettsäureester, native Öle wie Sonnenblumenöl, Olivenöl, Avocadoöl oder Kokosöl, Wachseester wie Jojobaöl, Lanolinderivate, Silikonöle und aliphatische Kohlenwasserstoffe mit 6 oder mehr C-Atomen, wie z.B. Paraffinöle oder Cyclohexan.

Die Ölphase besteht bevorzugt aus Paraffinölen oder einem oder mehreren Fettsäureester. Diese letzteren Komponenten wirken sich positiv auf die kosmetische Formulierung (Aussehen, Hautgefühl) aus. Solche Komponenten sind z.B. Fettsäureisopropylester wie Isopropylpalmitat, Isopropylmyristat oder Polyglyceride von Fettsäuren, insbesondere Fettsäuregemischen, die mindestens 50 % Capryl- und/oder Caprinsäure enthalten (Miglyol 812 der Fa. Hüls). Bevorzugt sind Polyglycerinfettsäureester auf Basis einer Polyglycerinmischung, die im wesentlichen Mono-, Di-, Tri- und Tetraglycerin, vor allem Di- und Triglycerin, enthält. Selbstverständlich können auch Mischungen der genannten Ölkomponenten eingesetzt werden.

Der Anteil der Ölphase an der Gesamtemulsion beträgt 15 bis 70 %, vorzugsweise 20 bis 35 %.

Um die Wasserphase in der organischen Phase zu dispergieren, werden dafür bekannte W/O-Emulgatoren eingesetzt. Der HLB-Wert der verwendeten Emulgatoren liegt zwischen 4 und 8 [HLB-Wert = Hydrophilic/lipophilic balance, vgl. W.C. Giffin, J. Soc. Cosmet. Chem. 1, 311 (1950)]. Solche Emulgatoren sind z.B. Sorbitanmonooleat, Sorbitanmonostearat, Glycerylmonostearat, Blockcopolymere aus Hydroxyfettsäuren-Polyestern und Polyoxyethylen. Sie können alleine oder in Kombination in Gesamtkonzentrationen von 0,25 bis 10 %, vorzugsweise von 0,5 bis 5 % bzgl. der Gesamtemulsionen eingesetzt werden.

Es können der Emulsion zusätzlich Emulgatoren mit einem HLB-Wert von über 8 zugesetzt werden in Konzentrationen von 0,25 bis 7 % bzgl. der Gesamtemulsion. Solche Emulgatoren sind z.B. ethoxylierte C₆-C₁₂-Nonylphenole bzw. C₁₂-C₁₈-Fettalkohole; der Ethoxylierungsgrad beträgt 5 bis 20 mol-%.

Für das Emulgieren der wäßrigen Phase in die Ölphase benötigt man keine speziellen Aggregate, sondern man kann die wäßrige Monomerphase in einem Standardpolymerisationsgefäß durch Rühren mit z.B. einem Ankerrührer emulgieren. Die Drehzahl liegt in Abhängigkeit von der Kesselgeometrie zwischen 30 und 400 UpM.

Als Initiatoren können wasser- und/oder öllösliche Radikalbildner eingesetzt werden wie z.B. Alkali- oder Ammoniumperoxodisulfate, Wasserstoffperoxid, organische Peroxide ggf. mit Redox-Partnern oder Azoinitiatoren. Es können auch Initiatoren unterschiedlicher Zerfallstemperatur gemeinsam oder nacheinander eingesetzt werden. Bezogen auf die Monomermischung verwendet man 0,05 bis 0,5 % Initiator, vorzugsweise 0,05 bis 0,3 %.

Die Temperatur, bei der die Polymerisation erfolgt, liegt zwischen 20 und 150°C; sie kann konstant gehalten werden oder diskontinuierlich verändert werden (z.B. um durch Temperaturerhöhung den Umsatz zu steigern). Man erhält nach der Polymerisation Wasser in Öl-Emulsionen mit einem Feststoffgehalt von 10 bis 40 %, vorzugsweise von 15 bis 35 %. Zur Erhöhung des Feststoffgehaltes können die Emulsionen durch Destillation teilweise oder vollständig entwässert werden.

Die erfindungsgemäßen W/O-Emulsionen vernetzter Polymerisate werden als Verdickungsmittel vorzugsweise in kosmetischen oder pharmazeutischen Anwendungen eingesetzt. Die Polymerisate werden nicht isoliert, sondern in Form der W/O-Emulsion direkt eingesetzt. Typische Einsatzkonzentrationen sind 0,1 bis 0,8 %, vorzugsweise 0,2 bis 0,5 % Wirkstoff (Polymer). Die Verdickungswirkung der W/O-Emulsion tritt direkt nach dem Vermischen der W/O-Emulsion mit der kosmetischen O/W-Emulsion ein; um die optimale Wirkung zu erzielen, ist kein Zusatz eines Invertierungsmittels notwendig. Auch rein wäßrige Systeme lassen sich verdicken. Man erhält ein Cremegel.

Die erfindungsgemäße Nachbehandlung des W/O-Emulsionspolymerisats zur Verminderung der Restmonomerenmenge erfolgt insbesondere, nachdem die Gesamtmonomerenmenge in der radikalischen Lösungspolymerisation zu mindestens 95 und bevorzugt jedoch zu mindestens 98, besonders bevorzugt mindestens bis 99,9 Gew.-% umgesetzt wurde. Die Verhältnisse bei der Hauptpolymerisation und bei der Nachbehandlung sind im allgemeinen verschieden. Die Konzentration an Initiierungssystem ist bei der Nachbehandlung zur Restmonomerenabsenkung gegenüber der Hauptpolymerisation in der Regel deutlich erhöht. Eine weiterer Einsatz des Initiierungssystems der Hauptpolymerisation führt zu einer drastischen Verschlechterung der Verdickerwirkung. Zudem ist eine Vervollständigung mit dem Initiierungssystem aus der Hauptpolymerisation im Sinne des Raum-Zeit-Umsatzes ineffektiv und unwirtschaftlich. Bei der Herstellung von W/O-Emulsionspolymerisaten ist daher in der Regel für die Hauptpolymerisation und die Nachbehandlung unterschiedliche Initiatorensysteme erforderlich.

Wie die Verfahren der radikalischen Polymerisation generell, erfolgt auch das erfindungsgemäße Verfahren in der Regel unter Inertgasatmosphäre (z.B. N₂, Ar).

Selbstverständlich ist es möglich, die nachbehandelten W/O-Emulsionspolymerisate einer Inertgas- und/oder Wasserdampfstrippung zuzuführen.

Die erfindungsgemäß einzusetzenden radikalischen Redoxinitiatorsysteme ermöglichen eine wirksame Restmonomerenabsenkung in relativ kurzer Zeit. Ferner ist von Bedeutung, daß das erfindungsgemäß beanspruchte Reduktionsmittel in der Regel W/O-Emulsionspolymerisaten als Konservierungsmittel zuzusetzende Microcide in vorteilhafter Weise nicht zu reduzieren vermag, weshalb eine Anwendung desselben im Überschuß die diesbezügliche Qualität des W/O-Emulsionspolymerisats nicht mindert.

### Beispiel 1

### Herstellung eines W/O-Emulsionspolymerisats

In einem 2-l-Polymerisationsgefäß, das mit Ankerrührer, Thermometer, Stickstoffeinlaß und -auslaß versehen ist, wird die nachstehende Monomeremulsion vorgelegt. Die polymerisierbare Mischung wird unter Stickstoffstrom 30 min mit dem Initiator emulgiert. Zur Durchführung der Polymerisation wird danach die Temperatur auf 45°C angehoben. Während der Polymerisation steigt die Temperatur bis auf 70°C an. Anschließend wird die Temperatur zwei Stunden bei 80°C gehalten.

| Einsatzstoffe | Menge in g |
|---|---|
| Wasser | 316,1 |
| Miglyol 812 ¹⁾ | 208,0 |
| Acrylsäure | 164,8 |
| Natronlauge 50%ig | 91,8 |
| Span 80 ²⁾ | 8,0 |
| Arlacel P 135 ³⁾ | 8,0 |
| Triallylamin | 18,9 |
| Wako V 59 ⁴⁾ | 0,8 |
| Ameisensäure | 0,3 |
| Trilon C ⁵⁾ | 0,15 |

| | |
|---|---|
| ¹⁾ Caprylic/capric-Triglyceride (Hüls AG) | |
| ²⁾ Sorbitanmonooleat | |
| ³⁾ ABA-Blockcopolymere aus einem Hydroxystearinsäure-Kondensat und Polyethylenglykol (ICI) | |
| ⁴⁾ 2,2'-Azobis(2-methyl-butyronitril) (Wako) | |
| ⁵⁾ Diethylentriaminpentaessigsäure Pentanatriumsalz | |

Die Bestimmung der Gehalts an Acrylsäure im W/O-Emulsionspolymerisat erfolgte nach Bariumsulfat-Fällung des Polymeren in der überstehenden Lösung mittels HPLC-Messung.

Die Bewertung der Verdickerwirkung erfolgte anhand eine Cremgelrezeptur, bei der 0,5 Gew.-% Wirkstoff in Form einer W/O-Emulsion in Wasser unter Zusatz von 1 % Cremophor A 25 als Invertierungshilfsmittel homogenisiert werden. Die Viskosität des so hergestellten Cremgels wurde mit einem Hake-Handviskosimeter bestimmt.

Das oben hergestellte W/O-Emulsionspolymerisat wies einen Gehalt an Acrylsäure von 570 ppm bez. auf die W/O-Emulsion auf. Das mit dem W/O-Emulsionspolymerisat hergestellte Cremgel wies eine Viskosität von 21 Pa*s auf.

### Beispiel 2

### Herstellung eines W/O-Emulsionspolymerisats

Analog zu Beispiel 1 wurde ein W/O-Emulsionspolymerisat aus folgenden Einsatzstoffen hergestellt.

| Einsatzstoffe | Menge in g |
|---|---|
| Wasser | 316,1 |
| Paraffinöl ¹⁾ | 208,0 |
| Acrylsäure | 164,8 |
| Natronlauge 50%ig | 91,8 |
| Span 80 ²⁾ | 8,0 |
| Arlacel P 135 ³⁾ | 8,0 |
| Triallylamin | 18,9 |
| Wako V 59 ⁴⁾ | 0,8 |
| Ameisensäure | 0,3 |
| Trilon C ⁵⁾ | 0,15 |

| | |
|---|---|
| ¹⁾ Caprylic/capric-Triglyceride (Hüls AG) | |
| ²⁾ Sorbitanmonooleat | |
| ³⁾ ABA-Blockcopolymere aus einem Hydroxystearinsäure-Kondensat und Polyethylenglykol (ICI) | |
| ⁴⁾ 2,2'-Azobis(2-methyl-butyronitril) (Wako) | |
| ⁵⁾ Diethylentriaminpentaessigsäure Pentanatriumsalz | |

Das W/O-Emulsionspolymerisat wies einen Gehalt an Acrylsäure von 750 ppm bez. auf die W/O-Emulsion auf. Das mit dem W/O-Emulsionspolymerisat hergestellte Cremgel wies eine Viskosität von 27 Pa*s auf.

### Beispiele 3 bis 11

Zu jeweils 100 g des W/O-Emulsionspolymerisat aus Beispiel 1 wurden zur Verringerung der Restmonomeren Zulauf 1 (Tabelle 1) zugegeben. Anschließend wurde bei der angegebenen Temperatur Zulauf 2 in der angegebenen Zulaufzeit zudosiert.

Bei den nachbehandelten Polymerisaten wurde der Gehalt an Acrylsäure und die Viskositäten der mit den Polymerisaten hergestellten Cremgele bestimmt.

**Tabelle 1**

| Beispiel | Zulauf 1 | | Zulauf 2 | Zulaufzeit in h | T in °C | Gehalt an Acrylsäure bez. auf die W/O-Emulsion | Viskosität des Cremegels in Paß*s |
|---|---|---|---|---|---|---|---|
| 3 | H₂O₂ 1,17g ^{a)} | Eisensulfat 0,1 g ^{b)} | Weinsäure 0,43 g ^{c)} | 2 | 40 | 260 ppm | 23 |
| 4 | H₂O₂ 1,17g ^{a)} | Eisensulfat 0,1 g ^{b)} | Weinsäure 0,43 g ^{c)} | 4 | 40 | 150 ppm | 23 |
| 5 | H₂O₂ 1,17g ^{a)} | Eisensulfat 0,1 g ^{b)} | Weinsäure 0,43 g ^{c)} | 2 | 70 | 75 ppm | 21 |
| 6 | H₂O₂ 1,17g ^{a)} | Eisensulfat 0,1 g ^{b)} | Weinsäure 0,43 g ^{c)} | 4 | 70 | 110 ppm | 22 |
| 7 | H₂O₂ 1,17g ^{a)} | Eisensulfat 0,1 g ^{b)} | Weinsäure 0,22 g ^{c)} | 4 | 70 | 150 ppm | 23 |
| 8 | H₂O₂ 2,34g ^{a)} | Eisensulfat 0,1 g ^{b)} | Weinsäure 0,43 g ^{c)} | 4 | 70 | 110 ppm | 22 |
| 9 | t.-BuOOH ^{d)} 1,19g | Eisensulfat 0,1 g ^{b)} | Weinsäure 0,21 g ^{c)} | 2 | 70 | 150 ppm | 21 |
| 10 | H₂O₂ 1,17 g ^{a)} | Eisensulfat 0,1 g ^{b)} | α-Hydroxyaceton 1,77 g ^{e)} | 4 | 70 | 120 ppm | 23 |
| 11 | H₂O₂ 1,17g ^{a)} | Eisensulfat 0,1 g ^{b)} | α,α-Dihydroxyaceton 2,11 g ^{e)} | 4 | 70 | 100 ppm | 22 |
| 12 | Weinsäure 0,43g ^{c)} | Eisensulfat 0,1 g ^{b)} | H₂O₂ 1,17 g ^{a)} | 2 | 70 | 220 ppm | 24 |
| 13 | H₂O₂ 2,34g^{a)} | Eisensulfat 0,1 g^{b)} | Weinsäure 0,21 g^{c)} | 2 | 70 | 220 ppm | 24 |

| | | | | | | | |
|---|---|---|---|---|---|---|---|
| a) 3%ige wäßrige Lösung | | | | | | | |
| b) 1%ige wäßrige Lösung | | | | | | | |
| c) 10%ige wäßrige Lösung | | | | | | | |
| d) tert.-Butylhydroxid 10%ige wäßrige Lösung | | | | | | | |
| e) 5%ige wäßrige Lösung | | | | | | | |

### Beispiele 14 bis 15

Zu jeweils 100 g des W/O-Emulsionspolymerisats aus Beispiel 2 wurden zur Verringerung der Restmonomeren Zulauf 1 aus Tabelle 2 zugegeben. Anschließend wurde bei der angegebenen Temperatur Zulauf 2 in der angegebenen Zulaufzeit zudosiert.

Bei den nachbehandelten Polymerisaten wurde der Gehalt an Acrylsäure und die Viskositäten der mit den Polymerisaten hergestellten Cremgele bestimmt.

**Tabelle 2**

| Beispiel | Zulauf 1 | | Zulauf 2 | Zulaufzeit in h | T in °C | Gehalt an Acrylsäure bez. auf die W/O-Emulsion | Viskosität des Cremegels in Pa*s |
|---|---|---|---|---|---|---|---|
| 14 | H₂O₂ 1,17 g ^{a)} | Eisensulfat 0,1 g ^{b)} | Weinsäure 0,43 g ^{c)} | 2 | 70 | 260 ppm | 28 |
| 15 | H₂O₂ 1,17 g ^{a)} | Eisensulfat 0,1 g ^{b)} | Weinsäure 0,43 g ^{c)} | 4 | 70 | 250 ppm | 27 |

| | | | | | | | |
|---|---|---|---|---|---|---|---|
| a) 3%ige wäßrige Lösung | | | | | | | |
| b) 1%ige wäßrige Lösung | | | | | | | |
| c) 10%ige wäßrige Lösung | | | | | | | |

## Patentansprüche

1. Verfahren zur Herstellung von W/O-Emulsionen, in denen vernetzte, in Wasser gequollene Polymerisate dispergiert sind, durch Nachbehandlung mit einem Redox-Initiatorsystem zur Verringerung des Restmonomerengehalts, **dadurch gekennzeichnet, daß** man die Nachbehandlung der W/O-Emulsion unter Zugabe eines Redox-Initiatorensystems durchführt, das im wesentlichen
a) 0,001 bis 5 Gew.-%, bezogen auf die zur Herstellung des Polymerisats verwendeten Gesamtmonomerenmenge
a1) eines Oxidationsmittels
R¹OOH,
worin R¹ Wasserstoff, eine C₁- bis C₈-Alkyl- oder eine C₆- bis C₁₂-Arylgruppe bedeutet, und/oder
a2) einer im wäßrigem Medium Wasserstoffperoxid freisetzende Verbindung, und
b) 0,005 bis 5 Gew.-%, bezogen auf die zur Herstellung des Polymerisats verwendete Gesamtmonomerenmenge
b1) einer α-Hydroxycarbonylverbindung 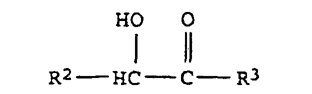 in der die Variablen unabhängig voneinander folgende Bedeutung haben:
R² Wasserstoff, eine C₁-C₁₂-Alkylgruppe, die gegebenenfalls funktionelle Gruppen enthält und/oder olefinisch ungesättigt sein kann,
R³ Wasserstoff, OH, eine C₁-C₁₂-Alkylgruppe, die gegebenenfalls funktionelle Gruppen enthält und/oder olefinisch ungesättigt sein kann,
und wobei R² und R³ eine Ringstruktur ausbilden können, die ein Heteroatom und/oder funktionelle Gruppen enthalten und/oder olefinisch ungesättigt sein kann,
und/oder
b2) einer in wäßrigem Medium solche α-Hydroxycarbonylverbindung freisetzende Verbindung, und
c) katalytische Mengen eines mehrwertigen Metallions, das in mehreren Wertigkeitsstufen auftreten kann
umfaßt.

2. Verfahren nach Anspruch 1, bei dem die Polymerisate bestehen aus
a) 35 bis 100 Gew.-% ionischen Monomeren,
b) 0 bis 65 Gew.-% nicht-ionischen Monomeren
c) 0,3 bis 1 mol-%, bezogen auf a) und b) mindestens eines mindestens bifunktionellen Monomeren.

3. Verfahren nach Anspruch 2, **dadurch gekennzeichnet, daß** als ionische Monomere ungesättigte C₃-C₅-Carbonsäuren eingesetzt werden.

4. Verfahren nach Anspruch 1, **dadurch gekennzeichnet daß** die Ölphase aus einem oder mehreren Fettsäurestern besteht.

5. Verfahren nach Anspruch 4, **dadurch gekennzeichnet, daß** die Ölphase aus einem Triglycerid besteht.

6. Verfahren nach Anspruch 2, **dadurch gekennzeichnet, daß** die ionischen Monomere zu 5 bis 80 % neutralisiert sind.

7. Verfahren nach Anspruch 1 **dadurch gekennzeichnet, daß** die W/O-Emulsion 0,25 bis 10 Gew.-%, bevorzugt 0,5 bis 5 Gew.-%, eines Emulgators enthält.

8. Verfahren nach Anspruch 1, **dadurch gekennzeichnet, daß** das Oxidationsmittel eine anorganische Verbindung ist.

9. Verfahren nach Anspruch 1, **dadurch gekennzeichnet, daß** das Oxidationsmittel Wasserstoffperoxid ist.

10. Verfahren nach Anspruch 1, **dadurch gekennzeichnet, daß** R² eine Hydroxycarboxymethylgruppe ist.

11. Verfahren nach Anspruch 2, **dadurch gekennzeichnet, daß** man das Oxidationsmittel a) vorlegt und das Reduktionsmittel b) während der Nachbehandlung zuführt.

12. Verfahren nach Anspruch 1, **dadurch gekennzeichnet, daß** man die Metallionen dem W/O-Emulsionspolymerisat in der Nachbehandlung vor dem Oxidations- und Reduktionsmittel zusetzt.

13. Verfahren nach Anspruch 1, **dadurch gekennzeichnet, daß** man als mehrwertiges Metallion Eisenionen einsetzt.

14. Verfahren nach Anspruch 1, **dadurch gekennzeichnet, daß** die Temperatur der W/O-Emulsion während der Nachbehandlung 30 bis 130°C beträgt.

15. Verfahren nach Anspruch 1, **dadurch gekennzeichnet, daß** man die Nachbehandlung im Überdruck, bei Normaldruck (1 bar absolut), oder im Unterdruck durchführt.

16. Verfahren nach Anspruch 1, **dadurch gekennzeichnet, daß** der pH-Wert der Emulsion während der Nachbehandlung ≤ 9 ist.

17. W/O-Emulsion, hergestellt nach dem Verfahren gemäß Anspruch 1.

18. W/O-Emulsion nach Anspruch 17, **dadurch gekennzeichnet, daß** sie einen Restmonomerengehalt von weniger als 300 ppm, bezogen auf die W/O-Emulsion, aufweist.

## Claims

1. A process for preparing a W/O emulsion comprising crosslinked water-swollen addition polymers dispersed therein, by aftertreatment with a redox initiator system to reduce the residual monomer content, wherein said aftertreatment of said W/O emulsion is carried out with addition of a redox initiator system essentially comprising
a) from 0.001 to 5% by weight, based on the total monomer amount used to prepare the polymer,
a1) of an oxidizing agent
R¹OOH,
where R¹ is hydrogen, a C₁- to C₈-alkyl or C₆- to C₁₂-aryl group, and/or
a2) of a compound which in aqueous medium releases hydrogen peroxide, and
b) from 0.005 to 5% by weight, based on the total monomer amount used to prepare the polymer,
b1) of an α-hydroxy carbonyl compound 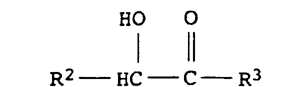 where, independently of each other,
R² is hydrogen or a C₁-C₁₂-alkyl group which if desired contains functional groups and/or can be olefinically unsaturated,
R³ is hydrogen, OH, a C₁-C₁₂-alkyl group which if desired contains functional groups and/or can be olefinically unsaturated,
and R² and R³ can form a ring structure which can include a heteroatom and/or functional groups and/or can be olefinically unsaturated,
and/or
b2) a compound which in aqueous medium releases such an α-hydroxy carbonyl compound, and
c) catalytic amounts of a polyvalent metal ion which is able to exist in a plurality of valence states.

2. A process as claimed in claim 1, wherein said polymers consist of
a) from 35 to 100% by weight of ionic monomers,
b) from 0 to 65% by weight of nonionic monomers, and
c) from 0.3 to 1 mol%, based on a) and b), of at least one at least bifunctional monomer.

3. A process as claimed in claim 2, wherein said ionic monomers are unsaturated C₃-C₅ carboxylic acids.

4. A process as claimed in claim 1, wherein the oil phase consists of one or more fatty acid esters.

5. A process as claimed in claim 4, wherein said oil phase consists of a triglyceride.

6. A process as claimed in claim 2, wherein said ionic monomers are neutralized to the extent of from 5 to 80%.

7. A process as claimed in claim 1, wherein said W/O emulsion contains from 0.25 to 10% by weight, preferably from 0.5 to 5% by weight, of an emulsifier.

8. A process as claimed in claim 1, wherein said oxidizing agent is an inorganic compound.

9. A process as claimed in claim 1, wherein said oxidizing agent is hydrogen peroxide.

10. A process as claimed in claim 1, wherein R² is a hydroxycarboxymethyl group.

11. A process as claimed in claim 2, wherein said oxidizing agent a) is introduced initially and said reducing agent b) is introduced during the aftertreatment.

12. A process as claimed in claim 1, wherein the metal ions are added to said W/O emulsion polymer in said aftertreatment prior to said oxidizing agent and said reducing agent.

13. A process as claimed in claim 1, wherein said polyvalent metal ion comprises iron ions.

14. A process as claimed in claim 1, wherein the temperature of said W/O emulsion during said aftertreatment is from 30 to 130°C.

15. A process as claimed in claim 1, wherein said aftertreatment is conducted under superatmospheric pressure, at atmospheric pressure (1 bar absolute), or under subatmospheric pressure.

16. A process as claimed in claim 1, wherein the pH of said emulsion during said aftertreatment is ≤ 9.

17. A W/O emulsion prepared by a process as claimed in claim 1.

18. A W/O emulsion as claimed in claim 17, having a residual monomer content of less than 300 ppm, based on the W/O emulsion.

## Revendications

1. Procédé pour la préparation d'émulsions E/H, dans lesquelles sont dispersés des polymères réticulés, gonflés dans l'eau, par post-traitement avec un système d'initiateur redox pour abaisser la teneur en monomères restants, **caractérisé par le fait qu'**on effectue le post-traitement de l'émulsion E/H par addition d'un système d'initiateur redox qui comporte pour l'essentiel
a) 0,001 à 5 % en poids, par rapport à la quantité totale de monomères utilisée pour la préparation du polymère
a1) d'un agent d'oxydation
R¹OOH,
dans lequel R¹ désigne l'hydrogène, un groupe alkyle en C₁ à C₈ ou un groupe aryle en C₆ à C₁₂, et/ ou
a2) d'un composé libérant du peroxyde d'hydrogène en milieu aqueux, et
b) 0,005 à 5 % en poids, par rapport à la quantité totale de monomères utilisée pour la préparation du polymère
b1) d'un composé d'α-hydroxycarbonyle 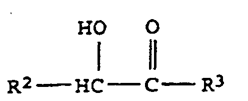 dans lequel les variables ont, indépendamment l'une de l'autre, la signification suivante:
R² hydrogène, un groupe alkyle en C₁-C₁₂, qui contient éventuellement des groupes fonctionnels et/ou peut comporter des insaturations oléfiniques,
R³ hydrogène, OH, un groupe alkyle en C₁-C₁₂, qui contient éventuellement des groupes fonctionnels et/ou peut comporter des insaturations oléfiniques,
et tandis que R² et R³ peuvent former une structure cyclique, qui peut contenir un hétéroatome et/ou des groupes fonctionnels, et/ou peut comporter des insaturations oléfiniques,
et/ou
b2) d'un composé libérant un tel composé d'α-hydroxy-carbonyle en milieu aqueux, et
c) des quantités catalytiques d'un ion métallique plurivalent pouvant se présenter sous plusieurs états de valence.

2. Procédé selon la revendication 1, dans lequel les polymères consistent en
a) 35 à 100 % en poids de monomères ioniques,
b) 0 à 65 % en poids de monomères non-ioniques,
c) 0,3 à 1 % en moles, par rapport à a) et b), d'au moins un monomère au moins bifonctionnel.

3. Procédé selon la revendication 2, **caractérisé par le fait qu'**on utilise comme monomères ioniques des acides carboxyliques en C₃-C₅ insaturés.

4. Procédé selon la revendication 1, **caractérisé par le fait que** la phase huileuse consiste en un ou plusieurs esters d'acides gras.

5. Procédé selon la revendication 4, **caractérisé par le fait que** la phase huileuse consiste en un triglycéride.

6. Procédé selon la revendication 2, **caractérisé par le fait que** les monomères ioniques sont neutralisés à 5 à 80 %.

7. Procédé selon la revendication 1, **caractérisé par le fait que** l'émulsion E/H contient de 0,25 à 10 % en poids, de préférence 0,5 à 5 % en poids, d'un émulsifiant.

8. Procédé selon la revendication 1, **caractérisé par le fait que** l'agent d'oxydation est un composé inorganique.

9. Procédé selon la revendication 1, **caractérisé par le fait que** l'agent d'oxydation est le peroxyde d'hydrogène.

10. Procédé selon la revendication 1, **caractérisé par le fait que** R² est un groupe hydroxycarboxyméthyle.

11. Procédé selon la revendication 2, **caractérisé par le fait qu'**on dispose l'agent d'oxydation a) et on ajoute l'agent réducteur b) pendant le post-traitement.

12. Procédé selon la revendication 1, **caractérisé par le fait qu'**on ajoute les ions métalliques au polymère en émulsion E/H dans le post-traitement avant l'agent d'oxydation et l'agent réducteur.

13. Procédé selon la revendication 1, **caractérisé par le fait qu'**on utilise des ions fer comme ion métallique plurivalent.

14. Procédé selon la revendication 1, **caractérisé par le fait que** la température de l'émulsion E/H pendant le post-traitement vaut de 30 à 130°C.

15. Procédé selon la revendication 1, **caractérisé par le fait qu'**on conduit le post-traitement sous pression positive, à la pression normale (1 bar absolu) ou sous pression négative.

16. Procédé selon la revendication 1, **caractérisé par le fait que** la valeur du pH de l'émulsion est ≤ 9 pendant le post-traitement.

17. Emulsion E/H, préparée par le procédé selon la revendication 1.

18. Emulsion E/H selon la revendication 17, **caractérisée par le fait qu'**elle présente une teneur en monomères restants inférieure à 300 ppm, par rapport à l'émulsion E/H.
